# EUROPÄISCHE PATENTSCHRIFT

(11) **EP 2 791 508 B1**
(45) Veröffentlichungstag und Bekanntmachung des Hinweises auf die Patenterteilung: **06.03.2019**
(21) Anmeldenummer: 12798777.4
(22) Anmeldetag: 12.12.2012
(51) Int. Cl.: F04B 41/06, F04C 19/00, F04C 23/00

(54) **VORRICHTUNG UND VERFAHREN ZUM EVAKUIEREN EINES RAUMS UND ZUM REINIGEN DES AUS DEM RAUM ABGESAUGTEN GASES**
DEVICE AND METHOD FOR EVACUATING A CHAMBER AND PURIFYING THE GAS EXTRACTED FROM SAID CHAMBER
DISPOSITIF ET PROCÉDÉ POUR METTRE UN ESPACE SOUS VIDE ET POUR ÉPURER LE GAZ SORTANT DE CET ESPACE PAR ASPIRATION

(30) Priorität: 14.12.2011 EP 11193573
(43) Veröffentlichungstag der Anmeldung: 22.10.2014
(73) Patentinhaber: Sterling Industry Consult GmbH, 25509 Itzehoe (DE)
(72) Erfinder: KÖSTERS, Heiner, 25524 Itzehoe (DE); GOTTSCHLICH, Uwe, 25582 Hohenaspe (DE)
(74) Vertreter: Glawe, Delfs, Moll
(86) Internationale Anmeldenummer: PCT/EP2012/075262
(87) Internationale Veröffentlichungsnummer: WO 2013/087713

(56) Entgegenhaltungen:
- WO-A1-89/12169
- FR-A- 1 129 872
- US-A- 3 956 072
- US-A- 4 692 101
- US-A1- 2011 142 740

## Beschreibung

Die Erfindung betrifft eine Vorrichtung, mit der ein Raum evakuiert werden kann und das aus dem Raum abgesaugte Gas von mitgeführten Fremdstoffen gereinigt werden kann. Die Vorrichtung umfasst eine trockenverdichtende Vakuumpumpe, deren Eingang an den zu evakuierenden Raum angeschlossen ist. Die Vakuumpumpe ist geeignet, den Eingangsdruck trotz variabler Bedingungen am Ausgang, insbesondere trotz variablen Drucks am Ausgang, konstant zu halten. Die Erfindung betrifft außerdem ein entsprechendes Verfahren.

Solche Vorrichtungen können beispielsweise in Abscheidungsprozessen, wie beispielsweise CVD(Chemical Vapor Deposition) -Prozessen zur Anwendung kommen. CVD-Prozesse werden in vielen Bereichen der Industrie genutzt, um Schichten bei reduziertem Druck auf unterschiedlichen Substraten zu erzeugen. Hierzu werden gasförmige Metallverbindungen bei hohen Temperaturen und/oder mit Plasmaunterstützung an der Substratoberfläche zu dem gewünschten Schichtsystem umgesetzt. Die realisierbaren, relativ hohen, Gasdrücke ermöglichen hohe Aufwachsraten und haben deshalb zu einer weiten Verbreitung in allen Bereichen der Vakuumbeschichtungstechnologie geführt. Ein Nachteil dieser hohen Aufwachsraten ist, dass die Abscheidungsreaktionen nicht nur auf dem Substrat, sondern in allen Bereichen der Beschichtungsanlage stattfinden. Dies betrifft nicht nur die Prozesskammerwände, sondern auch die Leitungen und Einrichtungen zwischen der Prozesskammer und dem Austritt der Abgase. Darüber hinaus sind die gasförmigen Ausgangs- und Zwischenprodukte im allgemeinen toxisch und korrosiv, daher sind derartige CVD Anlagen immer auch mit einer entsprechenden Abgasbehandlung ausgestattet.

Um die Ablagerungen in der Prozesskammer zu entfernen werden in modernen CVD Anlagen, zwischen den Prozessschritten, Ätzprozesse gefahren, die die Ablagerungen in der Prozesskammer in leichter verdampfbare Substanzen umsetzt. Ein typischer Vertreter dieser Substanzen ist Ammoniumchlorid, welches in der weiteren Leitungsführung immer wieder zum Aufwachsen an den Wänden neigt. Dies betrifft insbesondere die Vakuumpumpe und die Druckseite der Vakuumpumpe, da hier, entsprechend des Kontinuitätsgesetzes, der Volumenstrom stark zurückgeht und den Feststoffen daher die Möglichkeit zum Aufwachsen gibt.

Um die daraus resultierenden Probleme zu lösen, gibt es in industriellen Anlagen grundsätzlich heute zwei Lösungsstrategien. Der Einbau von Kühlfallen nach der Prozesskammer, mit geheizter Leitung bis zur Kühlfalle, um die kondensierbaren Substanzen an einer Stelle zu sammeln. Diese Vorgehensweise hat den Nachteil, dass die Kühlfallen regelmässig gereinigt/entleert werden müssen. Die andere Strategie ist die intensive Beheizung der Leitungen und das ausgiebige Zugeben von Inertgas, um einen ausreichenden Volumenstrom auch auf der Druckseite der Vakuumpumpe zu erreichen. Nachteilig sind hier der Energieverbrauch, die thermische und thermisch korrosive Belastung der Rohrleitungen, Ventile etc. Darüber hinaus belastet der Inertgasstrom die Abgasreinigung, die im Allgemeinen aus einem Abgaswäscher besteht. Zudem sind die Abgaswäscher sehr anfällig gegen Verstopfung an dem Gaseintritt, da hier bei hohem Druck und niedrigem Volumenstrom die Temperatur stark abfällt.

Der Erfindung liegt ausgehend vom eingangs genannten Stand der Technik die Aufgabe zu Grunde, eine Vorrichtung und ein Verfahren vorzustellen, mit denen das aus dem Raum abgesaugte Gas günstig und zuverlässig gereinigt werden kann. Ausgehend vom eingangs genannten Stand der Technik wird die Aufgabe gelöst mit den Merkmalen der unabhängigen Ansprüche. Vorteilhafte Ausführungsformen finden sich in den Unteransprüchen.

In vielen Anwendungsfällen ist es von großer Bedeutung, dass der Druck in dem zu evakuierenden Raum (beispielsweise der Prozesskammer des CVD-Prozesses) zuverlässig konstant gehalten werden kann. An den Raum wird deswegen eine trockenverdichtende Vakuumpumpe angeschlossen, die dies leisten kann, auch wenn die Bedingungen am Ausgang der Pumpe nicht zuverlässig konstant gehalten werden können. Eine Pumpe ist grundsätzlich nur dann geeignet, den Eingangsdruck trotz variabler Bedingungen am Ausgang konstant zu halten, wenn die Pumpe eine Mehrzahl von hintereinander angeordneten Arbeitskammern umfasst. Eingang und Ausgang sind dann durch eine Mehrzahl von Dichtspalten voneinander getrennt. Ein Beispiel für eine Pumpe, die dies leisten kann, ist eine Schrauben-Vakuumpumpe. Ein Beispiel für eine Pumpe, die nicht geeignet ist, den Eingangsdruck trotz variabler Bedingungen am Ausgang konstant zu halten, ist eine Wälzkolbenpumpe. Hier sind Eingang und Ausgang durch lediglich einen Dichtspalt voneinander getrennt, so dass eine Änderung am Ausgang sich über den Leckfluss unmittelbar auf die Bedingungen am Eingang auswirkt. Wälzkolbenpumpen werden deswegen typischerweise als Vorpumpen in einer mehrere Pumpen umfassenden Anordnung verwendet. Solche konventionellen Pumpenanordnungen mit einer Wälzkolbenpumpe als Vorpumpe, wie sie etwa in der FR 1129872 und der US 3,956,072 beschrieben sind, haben mit der Erfindung nichts zu tun.

An den Ausgang der trockenverdichtenden Vakuumpumpe ist über eine Zwischenleitung eine Flüssigkeitsring-Vakuumpumpe angeschlossen, die einen Zufluss und einen Abfluss der Betriebsflüssigkeit während des Betriebs der Pumpe zulässt. Die Flüssigkeitsring-Vakuumpumpe wäre als solche aus zwei Gründen nicht geeignet, direkt an den zu evakuierenden Raum angeschlossen zu werden. Erstens kann die Flüssigkeitsring-Vakuumpumpe kein Vakuum erzeugen, das unterhalb des Dampfdrucks der Betriebsflüssigkeit liegt. In dem zu evakuierenden Raum ist aber häufig ein niedrigerer Druck gefordert. Zweitens kann aus der Betriebsflüssigkeit der Flüssigkeitsring-Vakuumpumpe ein Dampf-Partialdruck in Richtung Saugseite entweichen. Dies ist nicht akzeptabel, weil es möglich sein muss, in dem zu evakuierenden Raum definierte Bedingungen aufrechtzuerhalten.

Der Erfindung liegen die folgenden Gedanken zu Grunde. In dem zu evakuierenden Raum herrscht eine Atmosphäre, in der die Feststoffe in dem Gas gelöst sind. Um zu vermeiden, dass beim Durchgang des Gases durch die erfindungsgemäße Vorrichtung die Feststoffe kondensieren und sich an Elementen der Pumpe niederschlagen, muss einerseits der Druck des Gases niedrig gehalten werden und muss andererseits der Volumenstrom hochgehalten werden, so dass das Gas sich mit hinreichender Geschwindigkeit bewegt.

Mit der erfindungsgemäßen trockenverdichtenden Vakuumpumpe wird vor diesem Hintergrund der Druck erhöht, jedoch auf einen Wert, der noch deutlich unterhalb des Atmosphärendrucks liegt. Damit liegt in der Zwischenleitung der Druck so niedrig und die Geschwindigkeit so hoch, dass noch keine Kondensation stattfindet. Zur Kondensation kommt es erst in der Flüssigkeitsring-Vakuumpumpe. Hier können die Stoffe allerdings sofort von der Betriebsflüssigkeit der Flüssigkeitsring-Vakuumpumpe aufgenommen werden und abtransportiert werden, so dass es aus diesem Grund nicht zu den unerwünschten Ablagerungen kommt. Der Begriff Kondensation umfasst insbesondere den Fall, dass ein Stoff unmittelbar aus der gasförmigen Phase in die feste Phase übergeht. Ein weiterer Abgaswäscher hinter der Flüssigkeitsring-Vakuumpumpe ist bei der erfindungsgemäßen Vorrichtung nicht erforderlich.

Der Druck an der Eingangsseite der trockenverdichtenden Vakuumpumpe kann beispielsweise zwischen 1 mbar und 40 mbar, vorzugsweise zwischen 2 mbar und 30 mbar, weiter vorzugsweise zwischen 5 mbar und 20 mbar liegen. Der Druck in der Zwischenleitung kann beispielsweise zwischen 80 mbar und 300 mbar, vorzugsweise zwischen 100 mbar und 150 mbar liegen.

Eine weitere Möglichkeit, der Kondensation entgegenzuwirken, besteht darin, am Ausgang der trockenverdichtenden Vakuumpumpe und/oder in der Zwischenleitung ein Spülgas einzuspeisen. Das Spülgas in diesem Bereich einzuspeisen, hat den Vorteil, dass mit einer kleinen Menge Gas eine deutliche Erhöhung des Volumenstroms und damit der Geschwindigkeit erreicht werden kann. Die Öffnung zum Zuführen des Spülgases kann ein geeignet angeordnetes Ventil sein. Möglich ist es auch, das Spülgas durch eine Öffnung zuzuführen, die in der trockenverdichtenden Vakuumpumpe zwischen einer Welle und dem Gehäuse besteht und die ohnehin abgedichtet werden muss. In diesem Fall kann das Spülgas gleichzeitig als Sperrgas der trockenverdichtenden Vakuumpumpe dienen.

Die Flüssigkeitsring-Vakuumpumpe ist vorzugsweise mit einem Einlass und einem Auslass für die Betriebsflüssigkeit versehen. Diese sind weiter vorzugsweise so gestaltet, dass ein Zufluss und ein Abfluss der Betriebsflüssigkeit während des Betriebs der Pumpe möglich sind. Dies ist wünschenswert, damit Betriebsflüssigkeit, die mit Fremdstoffen angereichert ist, durch frische Betriebsflüssigkeit ersetzt werden kann. Die Pumpe kann in dieser Ausführungsform so gestaltet sein, dass das Gehäuse der Flüssigkeitsring-Vakuumpumpe mit einer Eingangsöffnung für den Zufluss der Betriebsflüssigkeit und mit einer Ausgangsöffnung für den Abfluss der Betriebsflüssigkeit versehen ist. Möglich sind auch Gestaltungen, bei denen die Betriebsflüssigkeit zunächst durch denselben Auslass aus der Pumpe austritt wie der Gasstrom. In der sich anschließenden Leitung kann die Betriebsflüssigkeit von dem Gasstrom separiert werden.

Für den Fluss der Betriebsflüssigkeit gibt es mehrere Möglichkeiten. Es kann die aus der Flüssigkeitsring-Vakuumpumpe abgeführte Flüssigkeit entsorgt werden und eine entsprechende Menge frischer Flüssigkeit nachgeführt werden. Denkbar ist auch ein Kreislauf, bei dem die aus der Flüssigkeitsring-Vakuumpumpe abgeführte Flüssigkeit der Pumpe teilweise oder vollständig wieder zugeführt wird. Es kann ferner vorgesehen sein, die Verdichtungswärme über einen eingebauten Wärmetauscher abzuführen.

In allen Fällen ist es wünschenswert, die Betriebsflüssigkeit erst dann zu entsorgen, wenn sie hinreichend mit Fremdstoffen angereichert ist. Dazu kann es vorgesehen sein, mit einem Sensor die Leitfähigkeit der Betriebsflüssigkeit zu ermitteln. Aus der Leitfähigkeit kann auf den Gehalt an Fremdstoffen geschlossen werden. Der Sensor kann beispielsweise an der Flüssigkeitsring-Vakuumpumpe oder einer Leitung oder einem Behälter, durch den die Betriebsflüssigkeit geleitet werden, angeordnet sein. Die Vorrichtung kann so eingerichtet sein, dass in Abhängigkeit vom Gehalt an Fremdstoffen nur soviel Betriebsflüssigkeit zugeführt und abgeführt wird, wie erforderlich ist.

Die Betriebsflüssigkeit kann Wasser sein. Möglich ist es auch, dass die Betriebsflüssigkeit ein Lösungsmittel enthält, das auf die in dem Gas enthaltenen Fremdstoffe abgestimmt ist. Ein solches Lösungsmittel kann dazu beitragen, das Gas besonders wirksam zu reinigen.

Mitunter werden von dem Gas Stoffe mitgeführt, die entweder sauer oder basisch sind. In diesem Fall kann es zur Reinigung des Gases beitragen, wenn im Gegenzug die Betriebsflüssigkeit entsprechend basisch oder sauer ist. Es kann zu diesem Zweck ein pH-Sensor vorgesehen sein, um den pH-Wert der Betriebsflüssigkeit zu ermitteln. Es kann ferner eine Steuereinrichtung vorgesehen sein, die den pH-Wert in Abhängigkeit von den Messwerten des pH-Sensors einstellt. Dies kann beispielsweise geschehen, indem der Betriebsflüssigkeit Wasser zugeführt wird, wenn es lediglich darum geht, die Betriebsflüssigkeit zu neutralisieren. Möglich ist es auch, der Betriebsflüssigkeit eine Säure oder eine Lauge zuzuführen, wenn der pH-Wert in der entsprechenden Richtung verändert werden soll.

Einige Fremdstoffe in dem Gas lassen sich am besten durch Verbrennen beseitigen. Es kann zu diesem Zweck eine Verbrennungseinrichtung vorgesehen sein, die vorzugsweise in der Zwischenleitung angeordnet ist. Dabei kann es sich um eine thermische Verbrennung handeln, also eine mit beispielsweise Erdgas gespeiste Flamme, die mit dem Gas in Kontakt gebracht wird. Möglich ist auch eine katalytische Verbrennung, bei der das Gas mit einer erhitzten Oberfläche aus einem katalytischen Material in Kontakt gebracht wird. Durch die Verbrennung können die Fremdstoffe in dem Gas in eine Form gebracht werden, in der sie von der Betriebsflüssigkeit aufgenommen werden.

Die Erfindung betrifft außerdem ein Verfahren zum Evakuieren eines Raums und zum Reinigen des aus dem Raum abgesaugten Gases von mitgeführten Fremdstoffen. Bei dem Verfahren wird Gas aus dem Raum angesaugt. Der Druck wird auf einen Wert unterhalb Atmosphärendrucks erhöht, wobei eine Pumpe verwendet wird, die geeignet ist, den Eingangsdruck auch dann konstant zu halten, wenn der Ausgangsdruck variabel ist. Das Gas wird zu einer Flüssigkeitsring-Vakuumpumpe weitergeleitet, die das Gas bei Atmosphärendruck abgibt. Bei dem Verfahren werden der Druck und der Volumenstrom des an die Flüssigkeitsring-Vakuumpumpe weitergeleiteten Gases so eingestellt, dass noch keine Kondensation der Fremdstoffe stattfindet. Die Fremdstoffe kondensieren erst in der Flüssigkeitsring-Vakuumpumpe und werden dort von der Betriebsflüssigkeit aufgenommen und abgeführt. Die Flüssigkeitsring-Vakuumpumpe lässt einen Zufluss und einen Abfluss der Betriebsflüssigkeit während des Betriebs der Pumpe zu. Das Verfahren kann mit weiteren Merkmalen fortgebildet werden, die oben mit Bezug auf die erfindungsgemäße Vorrichtung beschrieben sind.

Die Erfindung wird nachfolgend unter Bezugnahme auf die beigefügten Zeichnungen anhand vorteilhafter Ausführungsformen beispielhaft beschrieben. Es zeigen:

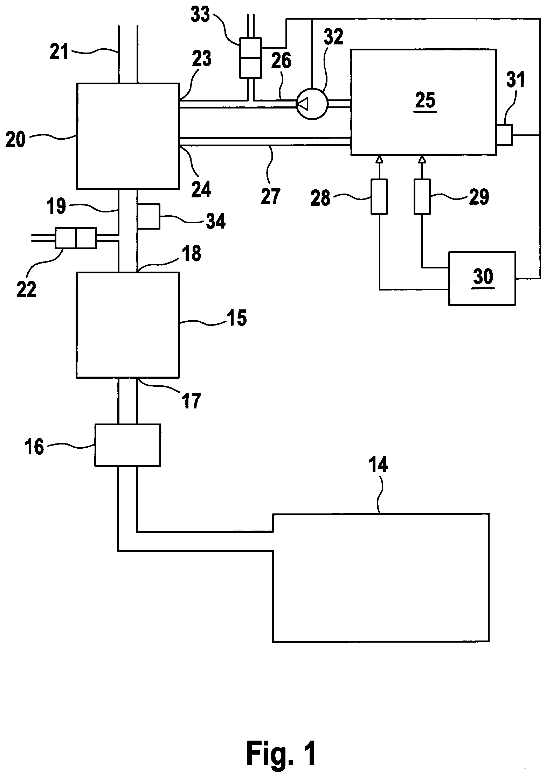

- Fig. 1:: eine Ausführungsform einer erfindungsgemäßen Vorrichtung.

Eine Prozesskammer eines CVD-Prozesses bildet den zu evakuierenden Raum 14. Der Eingang 17 einer Schrauben-Vakuumpumpe 15 ist an den zu evakuierenden Raum 14 angeschlossen. In der Leitung zwischen dem zu evakuierenden Raum 14 und der Schrauben-Vakuumpumpe 15 ist ein Druckminderungs-Ventil 16 angeordnet, durch das der Druck in dem Raum 14 höher eingestellt werden kann als der Druck am Eingang 17 der Schrauben-Vakuumpumpe 15. Im vorliegenden Beispiel herrscht in dem Raum 14 ein Druck von 80 mbar und am Eingang 17 der Schrauben-Vakuumpumpe 15 liegt ein Druck von 20 mbar an. Die Schrauben-Vakuumpumpe 15 hat die Aufgabe, den Druck am Eingang 17 konstant zu halten, auch wenn die Bedingungen am Ausgang 18 der Schrauben-Vakuumpumpe 15 variieren. Mit der Schrauben-Vakuumpumpe 15 wird das Gas auf einen Druck von etwa 120 mbar komprimiert und über den Ausgang 18 abgegeben.

An den Ausgang 18 der Schrauben-Vakuumpumpe 15 schließt sich eine Zwischenleitung 19 an, die zu einer Flüssigkeitsring-Vakuumpumpe 20 führt. Die Flüssigkeitsring-Vakuumpumpe 20 komprimiert das Gas weiter, so dass es über den Ausgang 21 bei Atmosphärendruck abgegeben werden kann.

Die Schrauben-Vakuumpumpe 15 und die Flüssigkeitsring-Vakuumpumpe 20 sind so aufeinander abgestimmt, dass in der Zwischenleitung 19 der Druck des Gases hinreichend niedrig und der Volumenstrom hinreichend hoch ist, so dass dort noch keine Kondensation der von dem Gas mitgeführten Fremdstoffe erfolgt. Zur Kondensation kommt es erst durch den weiteren Druckanstieg in der Flüssigkeitsring-Vakuumpumpe 20. Die Fremdstoffe werden dann sofort von der Betriebsflüssigkeit der Flüssigkeitsring-Vakuumpumpe 20 aufgenommen und können sich folglich nicht an Elementen der Vorrichtung anlagern.

In der Zwischenleitung 19 ist außerdem ein Ventil 22 angeordnet, über das Luft aus der Umgebung in die Zwischenleitung 19 als Spülgas eingelassen werden kann. Indem an dieser Stelle Spülgas eingelassen wird, genügt ein geringes Volumen an Spülgas, um den Volumenstrom in der Zwischenleitung 19 deutlich zu erhöhen. Durch das Spülgas kann also der Ablagerung der Fremdstoffe weiter entgegengewirkt werden.

Im Laufe des Betriebs reichern sich immer mehr Fremdstoffe in der Betriebsflüssigkeit an. Über einen Einlass 23 und einen Auslass 24 ist es deswegen möglich, der Flüssigkeitsring-Vakuumpumpe 20 während des Betriebs neue Betriebsflüssigkeit zuzuführen bzw. alte Betriebsflüssigkeit abzuführen. Dabei besteht zwischen der Flüssigkeitsring-Vakuumpumpe 20 und einem Vorratsbehälter 25 über eine Zuleitung 26 und eine Rückleitung 27 ein geschlossener Kreislauf für die Betriebsflüssigkeit. Während des Betriebs wird also laufend Betriebsflüssigkeit ausgetauscht, wodurch sich der Vortrag in dem Vorratsbehälter 25 immer weiter mit Fremdstoffen anreichert.

Mit einem Sensor 28 wird die Leitfähigkeit der Betriebsflüssigkeit in dem Vorratsbehälter 25 laufend gemessen. Aus der Leitfähigkeit kann auf den Gehalt an Fremdstoffen geschlossen werden, so dass bei Überschreiten eines vorgegebenen Schwellwerts die Betriebsflüssigkeit nicht weiter verwendet werden kann.

Die Messwerte von dem Sensor 28 werden einer Steuereinheit 30 zugeführt. Ist der Schwellwert überschritten, steuert die Steuereinheit 30 ein Ventil 31 an, so dass dem Behälter 25 ein Teil der nicht mehr brauchbaren Betriebflüssigkeit entnommen wird. Anschließend wird der Behälter 25 mit einer entsprechenden Menge an frischer Betriebflüssigkeit aufgefüllt. Über die Steuereinheit 30 wird außerdem eine Pumpe 32 angesteuert, über die der Flüssigkeitsring-Vakuumpumpe 20 die Betriebsflüssigkeit zugeführt wird.

Mit einem weiteren Sensor 29 wird der pH-Wert der Betriebsflüssigkeit in dem Vorratsbehälter 25 gemessen. Führt beispielsweise das Gas saure Fremdstoffe mit sich, kann es für die Reinigung des Gases vorteilhaft sein, wenn die Betriebsflüssigkeit basisch ist. Durch die Aufnahme der sauren Fremdstoffe sinkt der pH-Wert der Betriebsflüssigkeit ab, bis irgendwann die Aufnahme der sauren Fremdstoffe nicht mehr gewährleistet ist. Dies wird mit dem Sensor 29 ermittelt. Sobald ein entsprechender Messwert des Sensors 29 vorliegt, steuert die Vorrichtung 30 ein Ventil 33 an, über das der Betriebsflüssigkeit zusätzliche Lauge zugeführt wird. Dadurch behält die Betriebsflüssigkeit dauerhaft die gewünschten basischen Eigenschaften.

Sind die in dem Gas mitgeführten Fremdstoffe basisch, ist der Ablauf über den Sensor 29, die Steuereinrichtung 30 und das Ventil 33 genau umgekehrt.

In der Zwischenleitung 19 ist schließlich eine Verbrennungseinrichtung 34 angeordnet. Diese wird aktiviert, wenn in dem Gas Fremdstoffe mitgeführt sind, die erst nach einer Verbrennung von der Betriebsflüssigkeit der Flüssigkeitsring-Vakuumpumpe 20 aufgenommen werden können.

## Patentansprüche

1. Vorrichtung zum Evakuieren eines Raums (14) und zum Reinigen des aus dem Raum (14) abgesaugten Gases von mitgeführten Fremdstoffen, mit folgenden Merkmalen:
a. eine trockenverdichtende Vakuumpumpe (15), deren Eingang (17) an den zu evakuierenden Raum (14) angeschlossen ist und die geeignet ist, den Eingangsdruck trotz variabler Bedingungen am Ausgang (18) konstant zu halten;
b. eine Zwischenleitung (19), die sich an den Ausgang (18) der trockenverdichtenden Vakuumpumpe (15) anschließt;
c. eine Flüssigkeitsring-Vakuumpumpe (20), deren Eingang an die Zwischenleitung (19) angeschlossen ist,
**dadurch gekennzeichnet, dass**
d. für die Flüssigkeitsring-Vakuumpumpe neben der Zwischenleitung (19) ein Einlass (23) und ein Auslass (24) vorgesehen ist, die einen Zufluss und einen Abfluss der Betriebsflüssigkeit während des Betriebs der Flüssigkeitsring-Vakuumpumpe (20) zulassen.

2. Vorrichtung nach Anspruch 1, **dadurch gekennzeichnet, dass** die trockenverdichtende Vakuumpumpe (15) dazu ausgelegt ist, an der Eingangsseite (17) einen Druck zwischen 1 mbar und 40 mbar, vorzugsweise zwischen 2 mbar und 30 mbar, weiter vorzugsweise zwischen 5 mbar und 20 mbar zu erzeugen.

3. Vorrichtung nach Anspruch 1 oder 2, **dadurch gekennzeichnet, dass** die trockenverdichtende Vakuumpumpe (15) dazu ausgelegt ist, in der Zwischenleitung (19) einen Druck zwischen 80 mbar und 300 mbar, vorzugsweise zwischen 100 mbar und 150 mbar zu erzeugen.

4. Vorrichtung nach einem der Ansprüche 1 bis 3, **dadurch gekennzeichnet, dass** am Ausgang (18) der trockenverdichtenden Vakuumpumpe (15) und/oder in der Zwischenleitung (19) eine Öffnung (22) zum Zuführen von Spülgas vorgesehen ist.

5. Vorrichtung nach Anspruch 4, **dadurch gekennzeichnet, dass** die Öffnung ein zwischen einer Welle und dem Gehäuse der trockenverdichtenden Vakuumpumpe (15) bestehender Spalt ist.

6. Vorrichtung nach einem der Ansprüche 1 bis 5, **dadurch gekennzeichnet, dass** das Gehäuse der Flüssigkeitsring-Vakuumpumpe (20) mit einer Eingangsöffnung für den Zufluss der Betriebsflüssigkeit und mit einer Ausgangsöffnung für den Abfluss der Betriebsflüssigkeit versehen ist.

7. Vorrichtung nach einem der Ansprüche 1 bis 6, **dadurch gekennzeichnet, dass** ein Sensor (28) zum Ermitteln der Leitfähigkeit der Betriebsflüssigkeit vorgesehen ist.

8. Vorrichtung nach Anspruch 6 oder 7, **dadurch gekennzeichnet, dass** eine Steuereinrichtung (30) vorgesehen ist, die den Zufluss und den Abfluss der Betriebsflüssigkeit in Abhängigkeit von der Konzentration an Fremdstoffen in der Betriebsflüssigkeit einstellt.

9. Vorrichtung nach einem der Ansprüche 1 bis 8, **dadurch gekennzeichnet, dass** in der Betriebsflüssigkeit der Flüssigkeitsring-Vakuumpumpe (20) ein Lösungsmittel enthalten ist, das auf die in dem Gas enthaltenen Fremdstoffe abgestimmt ist.

10. Vorrichtung nach einem der Ansprüche 1 bis 9, **dadurch gekennzeichnet, dass** ein pH-Sensor (29) zum Ermitteln des pH-Werts der Betriebflüssigkeit vorgesehen ist.

11. Vorrichtung nach Anspruch 10, **dadurch gekennzeichnet, dass** eine Steuereinrichtung (30) vorgesehen ist, die dazu ausgelegt ist, den pH-Wert der Betriebsflüssigkeit in Abhängigkeit von den Messwerten des pH-Sensors einzustellen.

12. Vorrichtung nach einem der Ansprüche 1 bis 11, **dadurch gekennzeichnet, dass** in der Zwischenleitung (19) eine Verbrennungseinrichtung (34) angeordnet ist.

13. Verfahren zum Evakuieren eines Raums (14) und zum Reinigen des aus dem Raum abgesaugten Gases von mitgeführten Fremdstoffen mit folgenden Schritten:
a. Ansaugen des Gases aus dem Raum (14);
b. Erhöhen des Drucks auf einen Wert unterhalb Atmosphärendruck, wobei eine trockenverdichtende Vakuumpumpe (15) verwendet wird, die geeignet ist, den Eingangsdruck auch dann konstant zu halten, wenn der Ausgangsdruck variabel ist;
c. Weiterleiten des Gases zu einer Flüssigkeitsring-Vakuumpumpe (20) über eine Zwischenleitung (19), die das Gas bei Atmosphärendruck abgibt, wobei die Flüssigkeitsringvakuumpumpe (20) über einen Einlass (23) und einen Auslass (24) einen Zufluss und einen Abfluss der Betriebsflüssigkeit während des Betriebs der Flüssigkeitsring-Vakuumpumpe (20) zulässt.

## Claims

1. Device for evacuating a chamber (14) and for purifying the gas that is extracted from the chamber (14) of entrained foreign substances, having the following features:
a. a dry-compression vacuum pump (15), the inlet (17) of which is connected to the chamber (14) to be evacuated and which is suitable for keeping the inlet pressure constant despite variable conditions at the outlet (18);
b. an intermediate line (19) which connects to the outlet (18) of the dry-compression vacuum pump (15);
c. a liquid ring vacuum pump (20), the inlet of which is connected to the intermediate line (19),
**characterized in that**, in addition to the intermediate line (19), an inlet (23) and an outlet (24) are provided for the liquid ring vacuum pump, which inlet and outlet permit an inflow and outflow of the operating liquid during the operation of the liquid ring vacuum pump (20).

2. Device according to Claim 1, **characterized in that** the dry-compression vacuum pump (15) is designed to generate a pressure of between 1 mbar and 40 mbar, preferably between 2 mbar and 30 mbar, more preferably between 5 mbar and 20 mbar, at the inlet side (17).

3. Device according to Claim 1 or 2, **characterized in that** the dry-compression vacuum pump (15) is designed to generate a pressure of between 80 mbar and 300 mbar, preferably between 100 mbar and 150 mbar, in the intermediate line (19).

4. Device according to one of Claims 1 to 3, **characterized in that** an opening (22) for the supply of scavenging gas is provided at the outlet (18) of the dry-compression vacuum pump (15) and/or in the intermediate line (19).

5. Device according to Claim 4, **characterized in that** the opening is a gap that exists between a shaft and the housing of the dry-compression vacuum pump (15).

6. Device according to one of Claims 1 to 5, **characterized in that** the housing of the liquid ring vacuum pump (20) is provided with an inlet opening for the inflow of the operating liquid and with an outlet opening for the outflow of the operating liquid.

7. Device according to one of Claims 1 to 6, **characterized in that** a sensor (28) is provided for determining the conductivity of the operating liquid.

8. Device according to Claim 6 or 7, **characterized in that** a control device (30) is provided which adjusts the inflow and the outflow of the operating liquid as a function of the concentration of foreign substances in the operating liquid.

9. Device according to one of Claims 1 to 8, **characterized in that** the operating liquid of the liquid ring vacuum pump (20) contains a solvent which is coordinated with the foreign substances contained in the gas.

10. Device according to one of Claims 1 to 9, **characterized in that** a pH sensor (29) is provided for determining the pH value of the operating liquid.

11. Device according to Claim 10, **characterized in that** a control device (30) is provided which is designed to adjust the pH value of the operating liquid as a function of the measurement values from the pH sensor.

12. Device according to one of Claims 1 to 11, **characterized in that** a combustion device (34) is arranged in the intermediate line (19).

13. Method for evacuating a chamber (14) and for purifying the gas that is extracted from the chamber of entrained foreign substances, having the following steps:
a. drawing the gas out of the chamber (14);
b. increasing the pressure to a value below atmospheric pressure, wherein a dry-compresion vacuum pump (15) is used which is suitable for keeping the inlet pressure constant even if the outlet pressure is variable;
c. conducting the gas onward via an intermediate line (19) to a liquid ring vacuum pump (20) which outputs the gas at atmospheric pressure, wherein the liquid ring vacuum pump (20), via an inlet (23) and an outlet (24), permits an inflow and an outflow of the operating liquid during the operation of the liquid ring vacuum pump (20).

## Revendications

1. Dispositif pour mettre un espace (14) sous vide et pour épurer le gaz aspiré hors de l'espace vis-à-vis des particules étrangères entraînées avec celui-ci, présentant les éléments suivants :
a. une pompe à vide (15) à compression à sec dont l'entrée (17) est raccordée à l'espace (14) à mettre sous vide et qui apte à maintenir constante la pression d'entrée malgré des conditions variables à la sortie (18) ;
b. une conduite intermédiaire (19) qui se raccorde à la sortie (18) de la pompe à vide (15) à compression à sec ;
c. une pompe à vide (20) à anneau liquide dont l'entrée est raccordée à la conduite intermédiaire (19),
**caractérisé en ce que**
d. outre la conduite intermédiaire (19), il est prévu une entrée (23) et une sortie (24) pour la pompe à vide à anneau liquide, qui permettent une admission et une évacuation du liquide de fonctionnement pendant le fonctionnement de la pompe à vide (20) à anneau liquide.

2. Dispositif selon la revendication 1,
**caractérisé en ce que**
la pompe à vide (15) à compression à sec est conçue pour générer du côté entrée (17) une pression entre 1 mbar et 40 mbar, de préférence entre 2 mbar et 30 mbar, de préférence particulière entre 5 mbar et 20 mbar.

3. Dispositif selon la revendication 1 ou 2,
**caractérisé en ce que**
la pompe à vide (15) à compression à sec est conçue pour générer une pression dans la conduite intermédiaire (19) qui est entre 80 mbar et 300 mbar, de préférence entre 100 mbar et 150 mbar.

4. Dispositif selon l'une des revendications 1 à 3,
**caractérisé en ce que**
une ouverture (22) pour amener un gaz de rinçage est prévue à la sortie de la pompe à vide (15) à compression à sec et/ou dans la conduite intermédiaire (19).

5. Dispositif selon la revendication 4,
**caractérisé en ce que**
l'ouverture est une fente existant entre un arbre et le boîtier de la pompe à vide (15) à compression à sec.

6. Dispositif selon l'une des revendications 1 à 5,
**caractérisé en ce que**
le boîtier de la pompe à vide (20) à anneau liquide est pourvu d'une ouverture d'entrée pour l'admission du liquide de fonctionnement et d'une ouverture de sortie pour l'évacuation du liquide de fonctionnement.

7. Dispositif selon l'une des revendications 1 à 6,
**caractérisé en ce que**
il est prévu un capteur (28) pour déterminer la conductivité du liquide de fonctionnement.

8. Dispositif selon la revendication 6 ou 7,
**caractérisé en ce que**
il est prévu un moyen de commande (30) qui ajuste l'admission et l'évacuation du liquide de fonctionnement en fonction de la concentration de particules étrangères dans le liquide de fonctionnement.

9. Dispositif selon l'une des revendications 1 à 8,
**caractérisé en ce que**
un solvant est contenu dans le liquide de fonctionnement de la pompe à vide (20) à anneau liquide, solvant qui est adapté aux particules étrangères contenues dans le gaz.

10. Dispositif selon l'une des revendications 1 à 9,
**caractérisé en ce que**
il est prévu un capteur pH (29) pour déterminer le pH du liquide de fonctionnement.

11. Dispositif selon la revendication 10,
**caractérisé en ce que**
il est prévu un moyen de commande (30) qui est conçu pour ajuster le pH du liquide de fonctionnement en fonction des valeurs mesurées du capteur pH.

12. Dispositif selon l'une des revendications 1 à 11,
**caractérisé en ce que**
un moyen à système de combustion (34) est agencé dans la conduite intermédiaire (19).

13. Procédé pour mettre un espace (14) sous vide et pour épurer le gaz aspiré hors de l'espace vis-à-vis des particules étrangères entraînées avec celui-ci, présentant les étapes suivantes :
a. aspirer le gaz hors de l'espace (14) ;
b. augmenter la pression à une valeur inférieure à la pression atmosphérique en utilisant une pompe à vide (15) à compression à sec qui est apte à maintenir constante la pression d'entrée même lorsque la pression de sortie est variable ;
c. acheminer le gaz jusqu'à une pompe à vide (20) à anneau liquide via une conduite intermédiaire (19) qui dégage le gaz à pression atmosphérique, la pompe à vide (20) à anneau liquide permettant une admission et une évacuation du liquide de fonctionnement via une entrée (23) et via une sortie (24) pendant le fonctionnement de la pompe à vide (20) à anneau liquide.
